# EUROPÄISCHE PATENTANMELDUNG

(11) **EP 4 675 894 A1**
(43) Veröffentlichungstag der Anmeldung: **07.01.2026**
(21) Anmeldenummer: 25186313.0
(22) Anmeldetag: 30.06.2025
(51) Int. Cl.: H02K 1/278, H02K 1/2783, H02K 1/30, H02K 15/035, H02K 1/28

(54) **ROTOR FÜR EINE ELEKTRISCHE MASCHINE**

(30) Priorität: 02.07.2024 DE 102024118799
(71) Anmelder: Rolls-Royce Deutschland Ltd & Co KG, 15827 Blankenfelde-Mahlow (DE)
(72) Erfinder: AMBROSI, Marco, 15827 Blankenfelde-Mahlow (DE)

(57) **Zusammenfassung**

Ein Rotor (11) für eine elektrische Maschine (1) umfasst: eine mit einer Welle (12) drehfest verbindbare oder verbundene Nabe (111) mit einer um eine Drehachse (R) des Rotors (11) verlaufenden Mantelfläche (118), ein die Mantelfläche (118) der Nabe (111) umgebendes Magnetsystem (M) mit mehreren Magneten (110) und zumindest ein auf die Nabe (111) aufgesetztes und entlang der Drehachse (D) relativ dazu bewegbares Endstück (114), das an einem axialen Ende des Magnetsystems (M) am Magnetsystem (M) befestigt ist.

## Beschreibung

Die vorliegende Offenbarung bezieht sich insbesondere auf einen Rotor für eine elektrische Maschine, auf eine elektrische Maschine, auf ein Fahrzeug und auf ein Verfahren zur Herstellung eines solchen Rotors und einer solchen elektrischen Maschine.

Fahrzeuge, insbesondere Luftfahrzeuge, werden in vielfältigen Ausgestaltungen angetrieben. Verbrennungsmaschinen, beispielsweise in Form von Kolbenmotoren oder Gasturbinentriebwerken, ermöglichen große Reichweiten und hohe Geschwindigkeiten. Elektrische Antriebseinheiten mit einer elektrischen Maschine ermöglichen demgegenüber einen Einsatz von nachhaltig erzeugter Energie und sind mitunter besonders wartungsarm und leise. Fortschritte in der Batterie- und Brennstoffzellentechnologie ermöglichen immer weitere Einsatzbereiche von elektrischen Antriebseinheiten.

Bei Elektromotoren und anderen elektrischen Maschinen kann eine immer weitere Verbesserung verschiedener Zielgrößen angestrebt werden, z.B. des Gewichts und der Lebensdauer. Solche Zielvorstellungen stehen jedoch mitunter in Konflikt miteinander. Insbesondere stellt es eine Herausforderung dar, das Gewicht einer elektrischen Maschine zu reduzieren.

Es besteht die Aufgabe, einen verbesserten Rotor für eine elektrische Maschine anzugeben.

Gemäß einem Aspekt wird ein Rotor für eine elektrische Maschine angegeben. Der Rotor umfasst eine mit einer Welle drehfest verbindbare oder verbundene Nabe mit einer um eine Drehachse des Rotors verlaufenden Mantelfläche, ein die Mantelfläche der Nabe umgebendes Magnetsystem mit mehreren Magneten und zumindest ein auf die Nabe aufgesetztes Endstück, das an einem axialen Ende des Magnetsystems am Magnetsystem befestigt ist. Dabei ist das zumindest eine Endstück, z.B. infolge einer thermischen Expansion oder Kontraktion des Magnetsystems und/oder der Nabe, entlang der Drehachse relativ zur Nabe bewegbar.

Das Endstück deckt somit einen Teil des Magnetsystems ab und schützt dieses dadurch, z.B. gegen Feuchtigkeit. Dabei ist das Endstück nicht fest an der Nabe (oder der Welle) montiert, sondern separat davon montiert. Beispielsweise sitzt es frei auf der Nabe. Eine Bewegung und/oder Verformung zumindest eines Teils des Magnetsystems relativ zur Nabe bedingt folglich eine Verlagerung des Endstücks relativ zur Nabe (ohne Beschädigungen). Bei dem Endstück handelt es sich z.B. um eine Scheibe. Das Endstück ist z.B. ringförmig, insbesondere als Kreisscheibe ausgebildet. Das Endstück ist z.B. in Form einer Platte ausgebildet. Es kann einen Kunststoff umfassen oder daraus bestehen. Da das Endstück also eine Bewegung relativ zur Nabe erlaubt, können für die verwendeten Materialien größere thermische Ausdehnungskoeffizienten gewählt werden, insbesondere auch größere Abweichungen zwischen den Ausdehnungskoeffizienten der einzelnen Komponenten. Hierdurch können leichtere Materialien eingesetzt werden, z.B. für die Nabe, wodurch das Gewicht des Rotors reduziert werden kann, ohne dass die Lebensdauer negativ beeinträchtigt wird. Auf diese Weise wird ein Rotor angegeben, der insbesondere dahingehend verbessert ist, dass er eine freiere Materialwahl und ein geringeres Gewicht ermöglicht.

Beispielsweise umfasst die Nabe Aluminium oder besteht daraus. In einer Ausgestaltung umfasst die Nabe eine Aluminiumlegierung oder besteht daraus. Zum Beispiel bildet Aluminium den größten Anteil der Nabe, insbesondere der Legierung der Nabe. Aluminium ist besonders leicht, einfach zu verarbeiten und im Vergleich mit anderen Materialien günstig in der Herstellung.

Zwischen dem zumindest einen Endstück und der Mantelfläche der Nabe kann ein Spalt, insbesondere ein um die Drehachse umlaufender Spalt, z.B. ein ringförmiger Spalt ausgebildet sein (z.B. ein die Mantelfläche radial außen umgebender Spalt; beispielsweise befindet sich der Spalt in radialer Richtung zwischen der Mantelfläche und dem Endstück). Beispielsweise steht das Endstück mit der Nabe nicht in Berührung. So wird eine besonders leichtgängige Bewegung ermöglicht.

Das zumindest eine Endstück kann mit dem axialen Ende des Magnetsystems verklebt sein. Das zumindest eine Endstück kann mit einem Klebstoff am axialen Ende des Magnetsystems befestigt sein. Das erlaubt eine besonders einfache Montage.

Das zumindest eine Endstück ist z.B. an einen oder mehrere Magnete (und/oder an zumindest ein weiteres Bauteil des Magnetsystems) des Magnetsystems geklebt. Das zumindest eine Endstück kann mit zumindest zwei der Magneten verklebt sein.

Das zumindest eine Endstück ist z.B. entlang der Drehachse auf die Nabe aufgesteckt. Das zumindest eine Endstück ist z.B. entlang der Drehachse relativ zur Nabe bewegbar. Das erlaubt eine besonders einfache Herstellung des Rotors.

Der Rotor kann ferner eine das Magnetsystem zumindest teilweise umschließende Hülle umfassen. Diese Hülle kann das Magnetsystem an der Nabe fixieren und gegenüber äußeren Einflüssen schützen.

In einer Ausgestaltung übt die Hülle einen radial nach innen gerichteten Druck auf das Magnetsystem aus. Hierdurch kann das Magnetsystem sicher fixiert werden.

Beispielsweise umfasst die Hülle einen Faserverbundwerkstoff (z.B. CFK) oder besteht daraus. Der Faserverbundwerkstoff umfasst Fasern, die in eine Matrix eingebettet sind. Bei den Fasern handelt es sich z.B. um Kohlenstoff-, Glas- und/oder Kunststofffasern. Bei dem Matrixmaterial handelt es sich z.B. um einen duroplastischen oder einen thermoplastischen Kunststoff.

Beispielsweise ist die Hülle am zumindest einen Endstück befestigt, z.B. außen am zumindest einen Endstück, z.B. an einer äußeren Mantelfläche des zumindest einen Endstücks. Hierdurch kann der Zusammenhalt weiter verbessert werden.

Der Rotor kann zwei Endstücke umfassen, die beide wie vorstehend beschrieben ausgebildet sein können. Das Magnetsystem kann zwischen den beiden Endstücken angeordnet sein. So kann das Magnetsystem an beiden axialen Enden geschützt werden.

Die Endstücke und die Hülle können das Magnetsystem spritzwassergeschützt, insbesondere wasserdicht, umschließen. Die Endstücke und/oder die Hülle können spritzwassergeschützt, insbesondere wasserdicht, an der Nabe abgedichtet sein. Zum Beispiel ist jedes Endstück mit einem optionalen Dichtring an der Nabe abgedichtet. Dies erlaubt einen guten Korrosionsschutz. In der Folge können auch korrosionsanfällige Materialien für das Magnetsystem verwendet werden. Alternativ oder zusätzlich wird z.B. ein Spalt zwischen den Endstücken und der Nabe so klein ausgeführt, dass die Endstücke zwar an der Nabe beweglich sind, jedoch bereits auf diesem Wege ein ausreichender Spritzwasserschutz vorliegt. Alternativ oder zusätzlich kann ein Schmiermittel zwischen den Endstücken und der Nabe eingebracht sein. Dieses kann ebenso Wasser daran hindern, einzudringen (und eine Bewegung erleichtern). In einigen Ausgestaltungen ist aus anderen Gründen ein Spritzwasserschutz nicht notwendig oder bereits gegeben.

In einer Ausgestaltung ist die Hülle durch ein mehrfach um das Magnetsystem gewickeltes Band ausgebildet. Dies ermöglicht eine einfache Herstellung mittels Faserverbundwerkstoffs. Wird das Band mit Zugspannung auf das Magnetsystem gewickelt, dann kann auch direkt ein radial nach innen gerichteter Druck aufgebaut werden. Alternativ oder zusätzlich zu einem gewickelten Band kann aber auch z.B. eine Hülse axial aufgeschoben werden, optional mittels einem Presssitz. Beispielsweise kann eine solche Hülse aufgeschrumpft werden.

Das Band ist z.B. mit einem Abschnitt (z.B. Endabschnitt) am einen der beiden Endstücke befestigt und/oder mit einem anderen Abschnitt (z.B. dem anderen Endabschnitt) am anderen der beiden Endstücke befestigt. Das ermöglicht eine einfache Montage und sichere Halterung.

Gemäß einem Aspekt wird eine elektrische Maschine angegeben. Die elektrische Maschine umfasst einen Stator mit zumindest einer elektrischen Spule und einen relativ zum Stator drehbar gelagerten Rotor nach einer beliebigen der hierin beschriebenen Ausgestaltungen. Hinsichtlich der Vorteile wird auf die obigen Angaben Bezug genommen.

Gemäß einem Aspekt wird ein Fahrzeug, insbesondere Luftfahrzeug, angegeben, umfassend die elektrische Maschine nach einer beliebigen der hierin beschriebenen Ausgestaltungen, eingerichtet zum Antrieb des Fahrzeugs, z.B. mittels eines dadurch angetriebenen Propellers. Bei Fahrzeugen, insbesondere bei Luftfahrzeugen, können die oben beschriebenen Vorteile besonders zum Tragen kommen.

Gemäß einem Aspekt wird ein Verfahren zur Herstellung eines Rotors für eine elektrische Maschine angegeben, insbesondere des Rotors nach einer beliebigen der hierin beschriebenen Ausgestaltungen. Das Verfahren umfasst das Bereitstellen einer mit einer Welle drehfest verbindbaren oder verbundenen Nabe mit einer um eine Drehachse verlaufenden Mantelfläche; das Anordnen eines Magnetsystems mit mehreren Magneten derart an der Nabe, dass es die Mantelfläche der Nabe umgibt; das Aufsetzen zumindest eines Endstücks auf die Nabe; und das Befestigen des zumindest einen Endstücks an einem axialen Ende des Magnetsystems, z.B. derart, dass das Endstück entlang der Drehachse relativ zur Nabe bewegbar ist.

Gemäß einem Aspekt wird ein Verfahren zur Herstellung einer elektrischen Maschine angegeben, insbesondere der elektrischen Maschine nach einer beliebigen der hierin beschriebenen Ausgestaltungen. Das Verfahren umfasst das Herstellen des Rotors gemäß dem Verfahren nach einer beliebigen der hierin beschriebenen Ausgestaltungen; und das Montieren des Rotors drehbar an (z.B. in) einem Stator, welcher zumindest eine elektrische Spule umfasst.

Es werden nun beispielhaft Ausführungsformen mit Bezug auf die Figuren beschrieben; in den Figuren zeigen:
- Figur 1: ein Luftfahrzeug in Form eines Flächenflugzeugs mit zwei elektrischen Antriebseinheiten mit jeweils einer elektrischen Maschine;
- Figur 2: eine Schnittdarstellung eines grundlegenden Aufbaus einer permanenterregten elektrischen Maschine als Innenläufer mit einem Stator und einem Rotor;
- Figur 3: eine seitliche, teilweise aufgeschnittene Ansicht des Rotors mit einer Welle verbundenen der elektrischen Maschine gemäß Figur 2, wobei insbesondere eine Nabe, ein Magnetsystem und zwei Endstücke gezeigt sind;
- Figur 4: eine Schnittdarstellung des Rotors gemäß Figur 3;
- Figur 5: eine Ansicht des Rotors entsprechend Figur 3, wobei eine das Magnetsystem einfassende Hülle gezeigt ist;
- Figur 6: eine vergrößerte Ansicht eines Ausschnitts aus Figur 3;
- Figur 7: eine Ansicht der Nabe und eines Endstücks des Rotors gemäß Figur 3; und
- Figur 8: ein Verfahren zur Herstellung eines Rotors und einer elektrischen Maschine mit einem solchen Rotor.

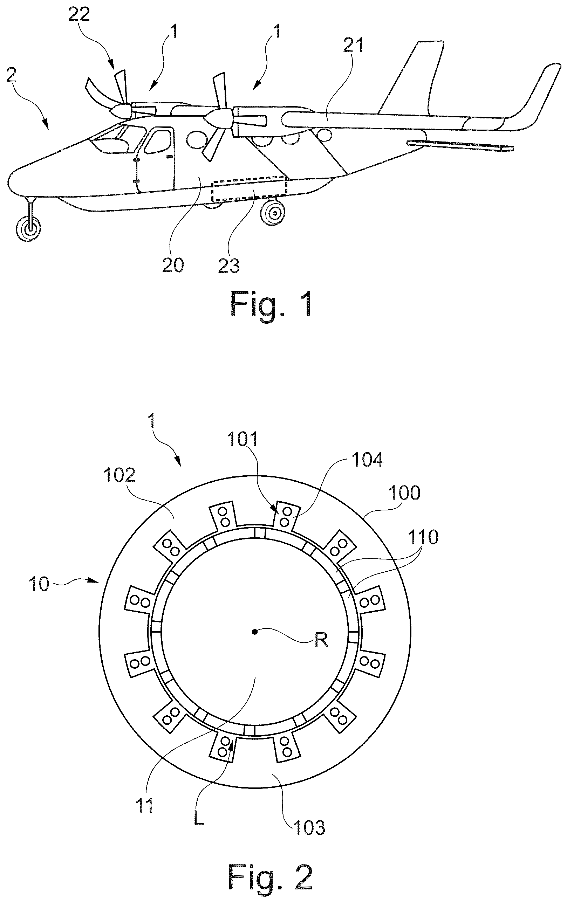

Figur 1 zeigt ein Luftfahrzeug 2 in Form eines elektrisch angetriebenen Flugzeugs mit einem Rumpf 20 und Flügeln 21.

Das Luftfahrzeug 2 umfasst zumindest eine elektrische Antriebseinheit, hier mehrere, nämlich konkret zwei elektrische Antriebseinheiten. Jede der elektrischen Antriebseinheiten umfasst eine elektrische Maschine 1 in Form eines Elektromotors und einen Propeller 22. Die durch die jeweilige elektrische Maschine 1 angetriebenen Propeller 22 erzeugen Schub für das Luftfahrzeug 2. Vorliegend ist jeweils eine elektrische Antriebseinheit an einem der Flügel 21 des Luftfahrzeugs 2 montiert, wobei auch andere Anordnungen denkbar sind. Die Propeller 22 umfassen mehrere, hier beispielhaft drei Propellerblätter, welche an einer Nabe montiert sind.

In alternativen Ausgestaltungen umfasst das Luftfahrzeug 2 z.B. einen Fan anstelle eines Propellers und/oder eine oder mehrere elektrische Antriebseinheiten mit jeweils zumindest einem Propeller, Fan oder einer sonstigen Rotoreinheit.

Weiter umfasst das Luftfahrzeug 2 exemplarisch ein Batteriesystem 23 (oder alternativ oder zusätzlich eine andere Energiequelle, z.B. eine Brennstoffzelle, einen Generator, eine Photovoltaikanlage oder dergleichen). Das Batteriesystem 23 speichert elektrische Energie zum Betrieb der elektrischen Antriebseinheiten. Das Batteriesystem 23 ist vorliegend an Wechselrichter angeschlossen, welche eine Gleichspannung des Batteriesystems 23 in eine Wechselspannung umwandeln. Mit der Wechselspannung wird die elektrische Maschine 1 der jeweiligen elektrischen Antriebseinheit beaufschlagt, um den jeweiligen Propeller 22 in eine Rotation zu versetzen und so das Luftfahrzeug 2 anzutreiben.

Figur 2 zeigt in einer vereinfachten Darstellung die elektrische Maschine 1 von einer der elektrischen Antriebseinheiten des Luftfahrzeugs 2.

Die elektrische Maschine 1 ist hier beispielhaft in Form einer permanenterregten Synchronmaschine ausgebildet. Aus Figur 2 ist ersichtlich, dass die elektrische Maschine 1 beispielhaft als Innenläufer ausgebildet ist. Bei der elektrischen Maschine 1 handelt es sich beispielhaft um eine Radialflussmaschine.

Die elektrische Maschine 1 umfasst einen Stator 10 und einen dazu drehbaren Rotor 11. Der Stator 10 weist eine nicht bezeichnete Öffnung auf, in welcher der Rotor 11 drehbar gelagert angeordnet ist.

Der Stator 10 umfasst einen Körper in Form eines Eisenkerns 100, an welchem im vorliegenden Beispiel Zähne 102 ausgebildet sind, die auch als Statorzähne bezeichnet werden können. Die Zähne 102 sind auf einen Luftspalt L zwischen dem Eisenkern 100 des Stators 10 und dem Rotor 11 ausgerichtet. Die Zähne 102 stehen radial von einem Ring 103 des Eisenkerns 100 ab, vorliegend radial in Richtung des Rotors 11. Vorliegend ist beiderseits des Zahns 102, um welchen die Spule 101 gewickelt ist, jeweils eine Nut 104 ausgebildet. Die Spule 101 verläuft in den beiden Nuten 104 beiderseits des Zahns 102.

Der Stator 10 weist mehrere elektrische Leiter auf, die in Form von Spulen 101 um die Zähne 102 des Stators 10 gewickelt sind. Der Stator 10 ist für einen mehrphasigen, hier dreiphasigen Betrieb ausgebildet und an eine dreiphasige Wechselspannung mit Phasen U, V, W angeschlossen. Im bestimmungsgemäßen Betrieb der elektrischen Maschine 1 sind die Spulen 101 (oder ist zumindest ein Teil der Spulen 101) entsprechend mit der Wechselspannung beaufschlagt.

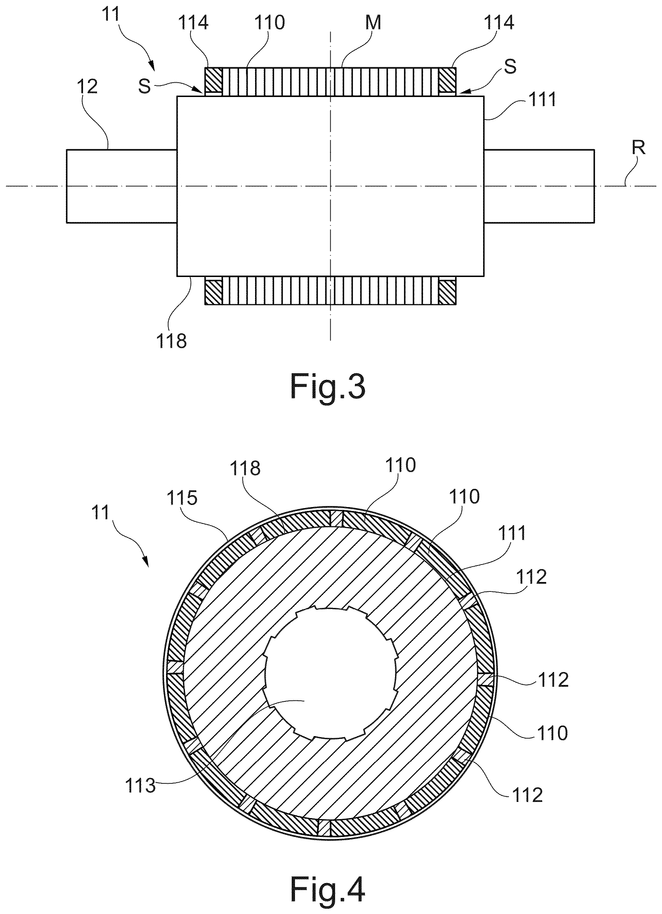

Der Rotor 11 umfasst zur Bereitstellung des magnetischen Flusses mehrere Magnete 110, vorliegend Permanentmagnete. Die Magnete 110 sind an einer äußeren Mantelfläche 118 einer Nabe 111 des Rotors 11 angeordnet (wie insbesondere in Figur 3 erkennbar). Die äußere Oberfläche des Rotors 11 ist dem Luftspalt L zugewandt. Die Magnete 110 sind also auf die Spulen 101 ausgerichtet. Die magnetischen Pole der Magnete 110 sind in Umfangsrichtung, z.B. alternierend oder in Form einer Hallbach-Anordnung oder dergleichen ausgerichtet.

Der Rotor 11 ist um eine Drehachse R relativ zum Stator 10 drehbar am Stator 10 gelagert. Durch die dreiphasige Wechselspannung, deren Phasen U, V, W um vorliegend jeweils 120° phasenverschoben sind, wird in den Spulen 101 ein magnetisches Drehfeld im bestimmungsgemäßen Betrieb erzeugt, welches mit dem durch den Rotor 11 bereitgestellten permanenterregten Magnetfeld zusammenwirkt, sodass in einem Motorbetrieb eine entsprechende Drehbewegung des Rotors 11 gegenüber dem Stator 10 herbeigeführt werden kann. Vorliegend ist vorgesehen, dass die elektrische Maschine 1 als Antriebsmotor für den jeweiligen Propeller 22 dient. Es kann vorgesehen sein, dass die elektrische Maschine 1 auch in einem Generatorbetrieb betreibbar ist (oder nur als Generator betreibbar ist). Im Betrieb als Elektromotor wird die elektrische Maschine 1 z.B. mit 100 kW bis zu 10 MW beaufschlagt.

Figur 3 veranschaulicht den Rotor 11 der elektrischen Maschine 1. Der Rotor 11 umfasst insbesondere die schon erwähnte Nabe 111, ein Magnetsystem M und zwei Endstücke 114. Das Magnetsystem M und die Endstücke 114 sind hierbei aufgeschnitten veranschaulicht.

Die Nabe 111 ist mit einer Welle 12 drehfest verbindbar. Im gezeigten Beispiel ist die Nabe 111 mit der Welle 12 drehfest verbunden, konkret über einen Formschluss. Die Welle 12 ist um die Drehachse R drehbar gelagert. Die Nabe 111 ist auf der Welle 12 montiert und gemeinsam damit um die Drehachse R drehbar gelagert.

Die Nabe 111 weist die um die Drehachse R des Rotors 11 verlaufende Mantelfläche 118 auf. Die Mantelfläche 118 ist vorliegend kreiszylindrisch ausgebildet, es sind aber auch andere Ausgestaltungen denkbar.

Das Magnetsystem M umgibt die Mantelfläche 118 der Nabe 111. Vorliegend verläuft das Magnetsystem M um die Nabe 111. Das Magnetsystem M verläuft vollständig um die Drehachse R herum. Das Magnetsystem M umfasst die schon genannten Magneten 110. In Umfangsrichtung um die Drehachse R herum sind mehrere Magneten 110 nebeneinander angeordnet. Ferner können auch mehrere Magneten 110 entlang der Drehachse R nebeneinander montiert sein; alternativ erstreckt sich genau ein Magnet 110 über die Länge des Magnetsystems M parallel zur Drehachse R.

Der Rotor 11 umfasst ferner zumindest ein auf die Nabe 111 aufgesetztes Endstück 114, das an einem axialen Ende des Magnetsystems M am Magnetsystem M befestigt ist. Im vorliegenden Beispiel umfasst der Rotor 11 die beiden bereits erwähnten Endstücke 114, von denen eines am einen axialen Ende (parallel zur Drehachse R betrachtet) des Magnetsystems M angeordnet ist, das andere am anderen axialen Ende. Vorliegend ist eines der Endstücke 114 an der einen Stirnfläche des Magnetsystems M angeordnet, das andere der Endstücke 114 an der gegenüberliegenden, anderen der beiden Stirnflächen. Zwischen jenen Stirnflächen weist das Magnetsystem M die den Spulen 101 des Stators 10 zugewandte äußere Oberfläche auf.

Die Endstücke 114 sind infolge einer Bewegung und/oder thermischen Expansion oder Kontraktion jeweils parallel zur Drehachse D relativ zur Nabe 111 bewegbar. Hierbei kann es sich um eine Verlagerung im einstelligen oder zweistelligen Millimeterbereich oder sogar im Bereich unter einem mm handeln. Auch wenn das Magnetsystem M also an der Nabe 111 befestigt ist, erlaubt die Befestigung der Endstücke 114 am Magnetsystem M (also nicht direkt an der Nabe 111) im Falle einer Bewegung von einer oder beiden Stirnflächen des Magnetsystems M relativ zur Nabe 111 also eine Verlagerung der Endstücke 114 relativ zur Nabe 111. Die Endstücke 114 sind also nicht direkt an der Nabe 111 befestigt, insbesondere nicht damit verschraubt, verklebt oder darauf aufgeschrumpft oder in einer sonstigen Presspassung damit. Vielmehr sind die Endstücke 114 in Bezug auf die Nabe 111 frei dazu verschiebbar. Die Endstücke 114 umgeben die Mantelfläche 118 der Nabe 111 neben dem Magnetsystem M.

Die Welle 12 ist z.B. fest mit dem entsprechenden Propeller 22 verbunden oder z.B. über ein Getriebe damit wirkverbunden.

Das Magnetsystem M ist an der Nabe 111 montiert, z.B. formschlüssig daran gehalten. Das Magnetsystem M ist zwischen den beiden Endstücken 114 angeordnet.

Wie in Figur 4 veranschaulicht, weist die Nabe 111 eine Öffnung 113 für die Welle 12 auf, in welcher im zusammengebauten Zustand die Welle 12 aufgenommen ist. Die Öffnung 113 weist eine Formschlusskontur auf, mit welcher die Welle 12 im formschlüssigen, drehfesten (optional axial beweglichen) Eingriff steht.

Radial außen weist die Nabe 111 einen oder mehrere, hier mehrere Vorsprünge 112 auf, welche eine Bewegung der Nabe 111 relativ zu den Magneten 110 entlang der Umfangsrichtung blockiert. Vorliegend ist lediglich beispielhaft jeweils wischen zwei Magneten 110 ein Vorsprung 112 angeordnet. Die Magneten 110 liegen im gezeigten Beispiel auf der Mantelfläche 118 der Nabe 111 auf.

Die Magneten 110 werden außen durch eine Hülle 115 umgeben. Die Hülle 115 schließt die auf der Nabe 111 angeordneten Magneten 110 ein. Die Hülle 115 umfasst einen Faserverbundwerkstoff wie beispielsweise CFK oder besteht daraus. Der Faserverbundwerkstoff umfasst Fasern, z.B. Endlosfasern, die von einer Matrix umgeben sind. Bei den Fasern handelt es sich um Kohlenstoff-, Glas- und/oder Kunststofffasern. Bei dem Matrixmaterial handelt es sich um einen duroplastischen oder einen thermoplastischen Kunststoff. Die Hülle 115 sichert die Magneten 110 an der Nabe 111 und schützt das Magnetsystem M gegen Einflüsse von außen, z.B. Feuchtigkeit.

Die Nabe 111 ist aus Aluminium oder einer Aluminiumlegierung hergestellt. Aluminium weist einen verhältnismäßig hohen thermischen Expansionskoeffizienten auf. Dies wird durch die schwimmende Lagerung der Endstücke 114 auf der Nabe 111 ermöglicht.

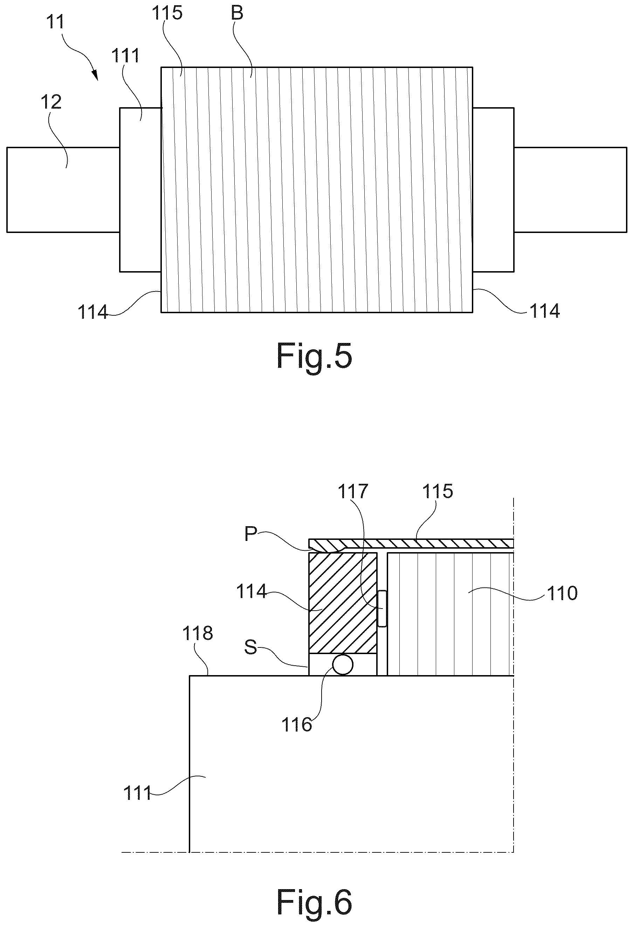

Figur 5 zeigt eine Seitenansicht des Rotors 11, wobei die das Magnetsystem M außen umschließende Hülle 115 sichtbar ist. Dabei ist erkennbar, dass die Hülle 115 durch ein mehrfach um das Magnetsystem M und die Endstücke 114 gewickeltes Band B ausgebildet ist.

Das Band B wird in der Herstellung z.B. mit einer Zugspannung auf das Magnetsystem M aufgewickelt, sodass die daraus geformte Hülle 115 einen radial nach innen gerichteten Druck auf das Magnetsystem M und insbesondere die Magneten 110 ausübt.

Das Band B ist vorliegend spiralförmig um das Magnetsystem M und die Endstücke 114 gewickelt.

Figur 6 veranschaulicht die Befestigung der Endstücke 114 und der Hülle 115.

Die Endstücke 114 sind vorliegend mit einem Klebstoff 117 am axialen Ende des Magnetsystems M befestigt. Eine (ringförmige) Stirnfläche des Magnetsystems M (z.B. einer Halterung der Magneten 110 und/oder der Magneten 110 selbst) ist jeweils einem der Endstücke 114 zugewandt. Diese Stirnfläche verläuft in einer zur Drehachse R senkrechten Ebene. Eine Stirnfläche des jeweiligen Endstücks 114 ist der entsprechenden Stirnfläche des Magnetsystems M zugewandt. Auch die Stirnfläche des jeweiligen Endstücks 114 verläuft in einer zur Drehachse R senkrechten Ebene. Diese einander zugewandten Stirnflächen sind mittels dem Klebstoff 117 miteinander verklebt.

Anhand der Figuren 3 und 6 ist zudem zu erkennen, dass die Endstücke 114 (die beiden Endstücke 114 in zueinander entgegengesetzten Richtungen) entlang der Drehachse D auf die Nabe 111 aufgesteckt sind und entlang der Drehachse D relativ dazu bewegbar sind. Dabei ist jeweils zwischen dem jeweiligen Endstück 114 und der Mantelfläche 118 der Nabe 111 jeweils ein ringförmiger Spalt S ausgebildet. Um das Eindringen von Feuchtigkeit zu verhindern, kann optional eine Dichtung 116 in dem Spalt S angeordnet sein, um diesen zu verschließen. Bei der Dichtung 116 handelt es sich z.B. um eine Gummidichtung und/oder um einen O-Ring.

Ferner zeigt Figur 6, dass die Hülle 115 an den Endstücken 114 (wie in Figur 6 für eines der Endstücke gezeigt) befestigt ist. Vorliegend ist ein Ende des Bandes B an einer Befestigungsstelle P am einen Endstück 114 befestigt, z.B. damit verklebt oder anderweitig daran fest montiert. Das andere Ende des Bandes B ist am anderen Endstück 114 z.B. in gleicher Weise montiert.

Die Endstücke 114 und die Hülle 115 fassen das Magnetsystem M an der Nabe 111 abgedichtet ein, z.B. wasserdicht.

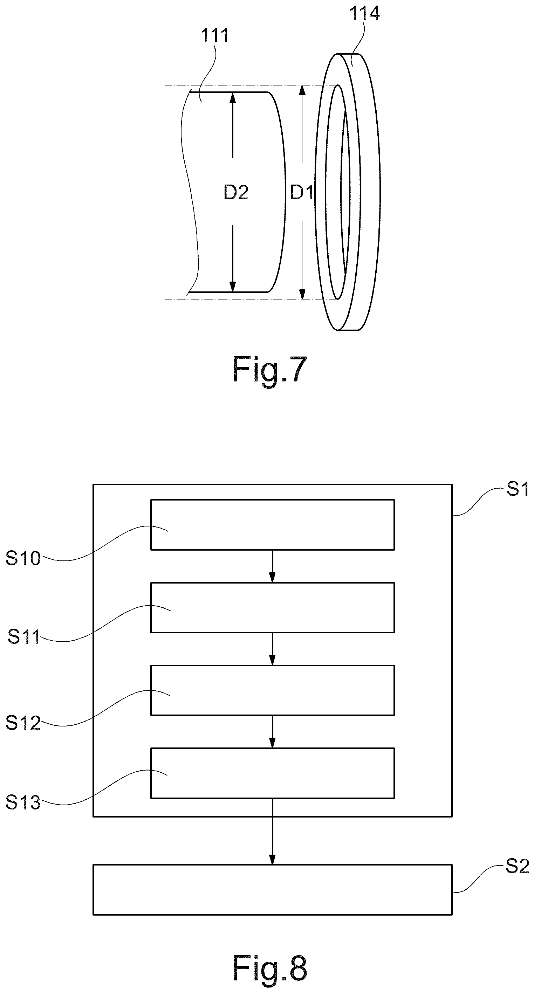

Figur 7 zeigt eines der Endstücke 114, hier beispielhaft in Form einer Kreisscheibe. Das Endstück 114 weist einen inneren Durchmesser D1 auf.

Ferner zeigt Figur 7 einen Teil der Nabe 111. Die Nabe 111 ist hier beispielhaft kreiszylindrisch ausgebildet. Die Nabe 111 weist einen äußeren Durchmesser D2 auf. Der äußere Durchmesser der Nabe 111 ist kleiner als der innere Durchmesser D1 des Endstücks 114. Hierdurch wird im zusammengebauten Zustand der bereits beschriebene Spalt S gebildet. Indem die Bewegung der Endstücke 114 relativ zur Nabe 111 ermöglicht wird, können sich durch thermische Expansionen bildende Spalte z.B. zwischen den Endstücken 114 und dem Magnetsystem M verhindert werden.

Figur 8 veranschaulicht ein Verfahren zur Herstellung einer elektrischen Maschine 1, z.B. der vorstehend beschriebenen elektrischen Maschine. Das Verfahren umfasst die folgenden Schritte.

Schritt S1: Herstellen eines z.B. wie vorstehend beschrieben ausgebildeten Rotors 11.

Schritt S2: Montieren des Rotors 11 drehbar an (insbesondere in) einem Stator 10, welcher zumindest eine elektrische Spule 100 aufweist.

Figur 8 veranschaulicht ferner ein Verfahren zur Herstellung eines z.B. wie vorstehend beschrieben ausgebildeten Rotors 11 für die elektrische Maschine 1. Das Verfahren umfasst die folgenden Schritte.

Schritt S10: Bereitstellen einer mit einer Welle 12 drehfest verbindbaren oder verbundenen Nabe 111 mit einer um eine Drehachse R verlaufenden Mantelfläche 118.

Schritt S11: Anordnen eines Magnetsystems M mit mehreren Magneten 110 derart an der Nabe 111, dass es die Mantelfläche 118 der Nabe 111 umgibt.

Schritt S12: Aufsetzen zumindest eines Endstücks 114 auf die Nabe 111, insbesondere zweier Endstücke 114 beiderseits des Magnetsystems M.

Schritt S13: Befestigen des zumindest einen Endstücks 114 an einem axialen Ende des Magnetsystems M (insbesondere der beiden Endstücke 114 an einem jeweiligen axialen Ende des Magnetsystems M) derart, dass das Endstück 114 (die Endstücke 114) infolge einer thermischen Ausdehnung oder Schrumpfung des Magnetsystems M und/oder der Nabe 111 entlang der Drehachse D relativ zur Nabe 111 bewegbar ist (sind).

Es sei angemerkt, dass der Einsatz der elektrischen Maschine 1 nicht auf ein Fahrzeug beschränkt ist.

Es versteht sich, dass die Offenbarung nicht auf die oben beschriebenen Ausführungsformen beschränkt ist und verschiedene Modifikationen und Verbesserungen vorgenommen werden können, ohne von den hier beschriebenen Konzepten abzuweichen. Beliebige der Merkmale können separat oder in Kombination mit beliebigen anderen Merkmalen eingesetzt werden, sofern sie sich nicht gegenseitig ausschließen, und die Offenbarung dehnt sich auf alle Kombinationen und Unterkombinationen eines oder mehrerer Merkmale, die hier beschrieben werden, aus und umfasst diese.

### Bezugszeichenliste

- 1: elektrische Maschine
- 10: Stator
- 100: Eisenkern
- 101: Spule
- 102: Zahn
- 103: Ring
- 104: Nut
- 11: Rotor
- 110: Magnet
- 111: Nabe
- 112: Vorsprung
- 113: Öffnung
- 114: Endstück
- 115: Hülle
- 116: Dichtung
- 117: Klebstoff
- 118: Mantelfläche
- 12: Welle
- 2: Luftfahrzeug
- 20: Rumpf
- 21: Flügel
- 22: Propeller
- 23: Batteriesystem
- B: Band
- D1, D2: Durchmesser
- L: Luftspalt
- M: Magnetsystem
- P: Befestigungsstelle
- R: Drehachse
- S: Spalt

## Patentansprüche

1. Rotor (11) für eine elektrische Maschine (1), umfassend:
- eine mit einer Welle (12) drehfest verbindbare oder verbundene Nabe (111) mit einer um eine Drehachse (R) des Rotors (11) verlaufenden Mantelfläche (118),
- ein die Mantelfläche (118) der Nabe (111) umgebendes Magnetsystem (M) mit mehreren Magneten (110) und
- zumindest ein auf die Nabe (111) aufgesetztes und entlang der Drehachse (D) relativ dazu bewegbares Endstück (114), das an einem axialen Ende des Magnetsystems (M) am Magnetsystem (M) befestigt ist.

2. Rotor (11) nach Anspruch 1, wobei die Nabe (111) Aluminium umfasst oder daraus besteht.

3. Rotor (11) nach Anspruch 1 oder 2, wobei zwischen dem zumindest einen Endstück (114) und der Mantelfläche (118) der Nabe (111) ein die Mantelfläche (118) außen umgebender, ringförmiger Spalt (S) ausgebildet ist.

4. Rotor (11) nach einem der vorhergehenden Ansprüche, wobei das zumindest eine Endstück (114) mit einem Klebstoff (117) am axialen Ende des Magnetsystems (M) befestigt ist insbesondere wobei das zumindest eine Endstück (114) mit zumindest einigen der Magneten (110) verklebt ist.

5. Rotor (11) nach einem der vorhergehenden Ansprüche, wobei das zumindest eine Endstück (114) entlang der Drehachse (D) auf die Nabe (111) aufgesteckt ist und entlang der Drehachse (D) relativ dazu bewegbar ist.

6. Rotor (11) nach einem der vorhergehenden Ansprüche, ferner umfassend eine das Magnetsystem (M) umschließende Hülle (115).

7. Rotor (11) nach Anspruch 6, wobei die Hülle (115) einen radial nach innen gerichteten Druck auf das Magnetsystem (M) ausübt und/oder einen Faserverbundwerkstoff umfasst und/oder außen am zumindest einen Endstück (114) befestigt ist.

8. Rotor (11) nach einem der vorhergehenden Ansprüche, umfassend zwei Endstücke (114), wobei das Magnetsystem (M) zwischen den beiden Endstücken (114) angeordnet ist.

9. Rotor (11) nach Anspruch 8, rückbezogen auf Anspruch 6, wobei die Endstücke (114) und die Hülle (115) das Magnetsystem (M) wasserdicht an der Nabe (111) umschließen.

10. Rotor (11) nach einem der vorhergehenden Ansprüche, wobei die Hülle (115) durch ein mehrfach um das Magnetsystem (M) gewickeltes Band (B) ausgebildet ist.

11. Rotor (11) nach Anspruch 10, rückbezogen auf Anspruch 8 und Anspruch 6, wobei das Band (B) mit einem Abschnitt am einen der beiden Endstücke (114) befestigt ist und mit einem anderen Abschnitt am anderen der beiden Endstücke (114) befestigt ist.

12. Elektrische Maschine (1), umfassend:
- einen Stator (10) mit zumindest einer elektrischen Spule (100) und
- einen relativ zum Stator (10) drehbar gelagerten Rotor (11) nach einem der vorhergehenden Ansprüche.

13. Fahrzeug, insbesondere Luftfahrzeug (2), umfassend die elektrische Maschine (1) nach dem vorhergehenden Anspruch zum Antrieb des Fahrzeugs.

14. Verfahren zur Herstellung eines Rotors (11) für eine elektrische Maschine (1), insbesondere nach einem der Ansprüche 1 bis 11, das Verfahren umfassend:
- Bereitstellen (S10) einer mit einer Welle (12) drehfest verbindbaren oder verbundenen Nabe (111) mit einer um eine Drehachse (R) verlaufenden Mantelfläche (118);
- Anordnen (S11) eines Magnetsystems (M) mit mehreren Magneten (110) derart an der Nabe (111), dass es die Mantelfläche (118) der Nabe (111) umgibt;
- Aufsetzen (S12) zumindest eines Endstücks (114) auf die Nabe (111); und
- Befestigen (S13) des zumindest einen Endstücks (114) an einem axialen Ende des Magnetsystems (M) derart, dass das Endstück (114) entlang der Drehachse (D) relativ zur Nabe (111) bewegbar ist.

15. Verfahren zur Herstellung einer elektrischen Maschine (1), umfassend:
- Herstellen (S1) des Rotors (11) nach dem Verfahren des vorhergehenden Anspruchs; und
- Montieren (S2) des Rotors (11) drehbar an einem Stator (10) mit zumindest einer elektrischen Spule (100).
